# EUROPEAN PATENT APPLICATION

(11) **EP 4 718 933 A1**
(43) Date of publication of application: **01.04.2026**
(21) Application number: 25204733.7
(22) Date of filing: 25.09.2025
(51) Int. Cl.: H04W 74/00, H04W 68/00, H04W 74/02

(54) **METHOD AND DEVICE FOR PERFORMING RANDOM ACCESS PROCEDURE**

(30) Priority: 25.09.2024 KR 20240130305; 22.09.2025 KR 20250136372
(71) Applicant: KT Corporation, Seongnam-si, Gyeonggi-do 13606 (KR)
(72) Inventor: KIM, Han Jun, 13606 Seongnam-si, Gyeonggi-do (KR); PARK, Kyujin, 13606 Seongnam-si, Gyeonggi-do (KR); LEE, Eun Jong, 13606 Seongnam-si, Gyeonggi-do (KR)
(74) Representative: Santarelli

(57) **Abstract**

Provided is a method for performing a random access procedure by an Ambient IoT terminal. The method may include: receiving random access type indication information from a reader device; determining a random access type based on the random access type indication information; and starting the random access procedure according to the random access type.

## Description

### CROSS-REFERENCE TO RELATED APPLICATION

This application claims priority from Korean Patent Application Nos. 10-2024-0130305, filed on September 25, 2024, and 10-2025-0136372, filed on September 22, 2025, which are hereby incorporated by reference for all purposes as if fully set forth herein.

### BACKGROUND

### Field

The present disclosure relates to a method and device for performing random access procedure in a next-generation radio access network (which means "5G", "New Radio (NR)", "5G-advanced", "6G" or post-6G 3GPP radio access network in the disclosure).

### Description of Related Art

In recent years, the Internet of things (IoT) has attracted significant attention in the field of wireless communication. An increasing number of objects are expected to be interconnected to improve productivity and increase comfort in daily life. Further reducing the size, complexity, and power consumption of IoT devices enables the deployment of tens or even hundreds of billions of IoT devices for various applications and may provide added value across the entire value chain. Powering all IoT devices with a battery is impractical, and batteries must be manually replaced or recharged, which may result in high maintenance costs, serious environmental problems, and even safety risks for certain use cases.

In this regard, efficient power consumption of IoT devices is required. Accordingly, a dedicated design is required to more efficiently manage energy of IoT devices.

### BRIEF SUMMARY

Embodiments of the disclosure may provide a method and device for performing random access procedure in an Ambient IoT (hereinafter also referred to as A-IoT) environment.

In accordance with an embodiment, a method may be provided for performing a random access procedure by an Ambient IoT terminal. The method may include: receiving, from a reader device, random access type indication information; determining a random access type based on the random access type indication information; and starting the random access procedure according to the random access type.

In accordance with another embodiment, a method may be provided for performing a random access procedure by a reader device. The method may include transmitting random access type indication information to an Ambient IoT terminal; and starting the random access procedure according to a random access type determined based on the random access type indication information.

In accordance with further another embodiment, an Ambient IoT terminal may be provided for performing a random access procedure. The Ambient IoT terminal may include a transmitter; a receiver; and a controller configured to control operations of the transmitter and the receiver, the controller being configured to receive random access type indication information from a reader device, determine a random access type based on the random access type indication information, and start the random access procedure according to the random access type.

In accordance with still another embodiment, a reader device may be provided for performing a random access procedure. The reader device may include a transmitter; a receiver; and a controller configured to control operations of the transmitter and the receiver, the controller being configured to transmit random access type indication information to an Ambient IoT terminal and start the random access procedure according to a random access type determined based on the random access type indication information.

According to the present embodiments, a method and an apparatus for a random access procedure may be provided in an Ambient IoT environment.

Further, wireless random access between A-IoT terminals and a reader may be performed more efficiently in an Ambient IoT environment. Specifically, the A-IoT terminals may efficiently determine, as a wireless access type, one of a contention-based random access (CBRA) and a contention-free random access (CFRA) based on information in a first R2D message received from the reader.

### DESCRIPTION OF DRAWINGS

The above and other objects, features, and advantages of the disclosure will be more clearly understood from the following detailed description, taken in conjunction with the accompanying drawings, in which:
FIG. 1 is a view schematically illustrating a structure for an NR wireless communication system;
FIG. 2 is a view illustrating a frame structure in an NR system;
FIG. 3 is a view illustrating a resource grid supported by radio access technology;
FIG. 4 is a view illustrating a bandwidth part supported by radio access technology;
FIG. 5 is a view exemplarily illustrating a synchronization signal block in radio access technology;
FIG. 6 is a view illustrating a random access procedure in radio access technology;
FIG. 7 is a view illustrating a CORESET;
FIG. 8 is a view illustrating RFID reader/tag operations and tag state;
FIGS. 9 to 13 are views illustrating connectivity topology for an Ambient IoT network and device;
FIG. 14 is a view illustrating general operations between an Ambient IoT terminal and a reader according to an embodiment;
FIG. 15 is a view illustrating a procedure in which an Ambient IoT terminal performs random access according to an embodiment;
FIG. 16 is a view illustrating a procedure in which a reader performs random access according to an embodiment;
FIGS. 17 and 18 are views illustrating an Ambient IoT topology according to an embodiment;
FIG. 19 is a view illustrating a random access procedure according to an indicated random access type in topology 1 according to an embodiment;
FIG. 20 is a view illustrating a random access procedure according to an indicated random access type in topology 2 according to an embodiment;
FIG. 21 is a view illustrating a random access procedure based on an A-IoT terminal ID in topology 1 according to an embodiment;
FIG. 22 is a view illustrating a random access procedure based on an A-IoT terminal ID in topology 2 according to an embodiment;
FIG. 23 is a view illustrating a random access procedure based on an A-IoT terminal ID type in topology 1 according to an embodiment;
FIG. 24 is a view illustrating a random access procedure based on an A-IoT terminal ID type in topology 2 according to an embodiment;
FIG. 25 is a view illustrating a configuration of an Ambient IoT terminal according to another embodiment; and
FIG. 26 is a view illustrating a configuration of a reader according to another embodiment.

### DETAILED DESCRIPTION

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, WiFi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports highspeed mobility.

In order to satisfy such scenarios, NR introduces a wireless communication system employing a new waveform and frame structure technology, a low-latency technology, a superhigh frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

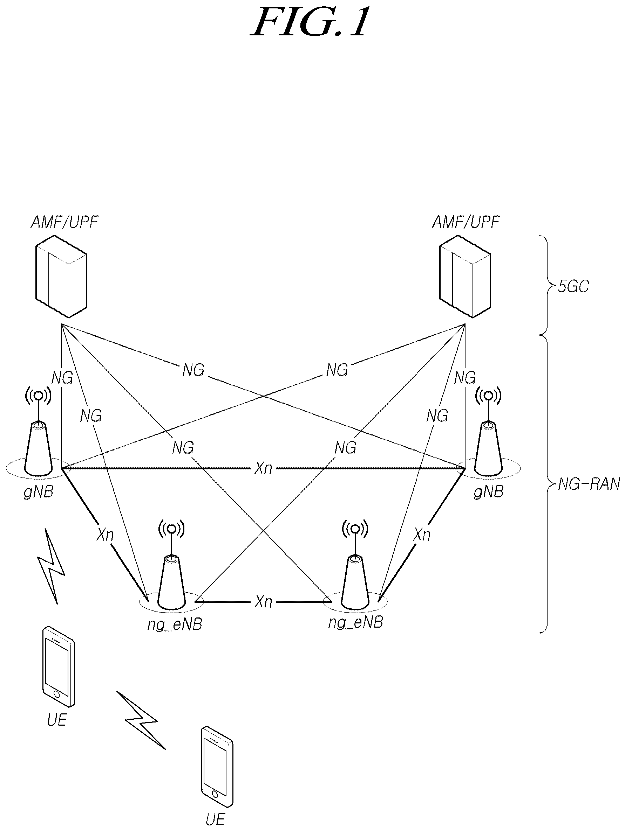

FIG. 1 is a view schematically illustrating an NR system to which the present embodiment is applicable.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | Normal | Yes | Yes |
| 1 | 30 | Normal | Yes | Yes |
| 2 | 60 | Normal, Extended | Yes | No |
| 3 | 120 | Normal | Yes | Yes |
| 4 | 240 | Normal | No | Yes |

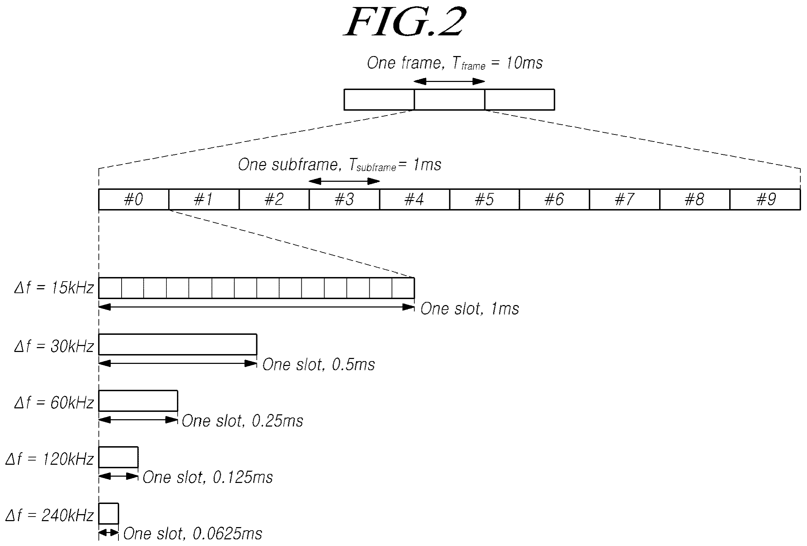

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

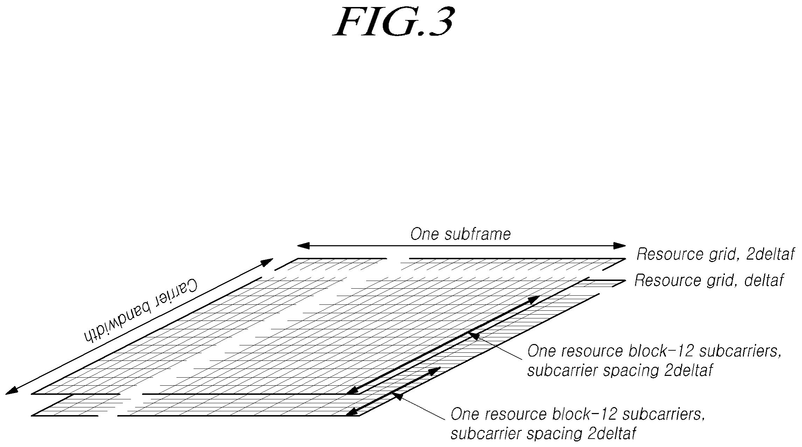

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

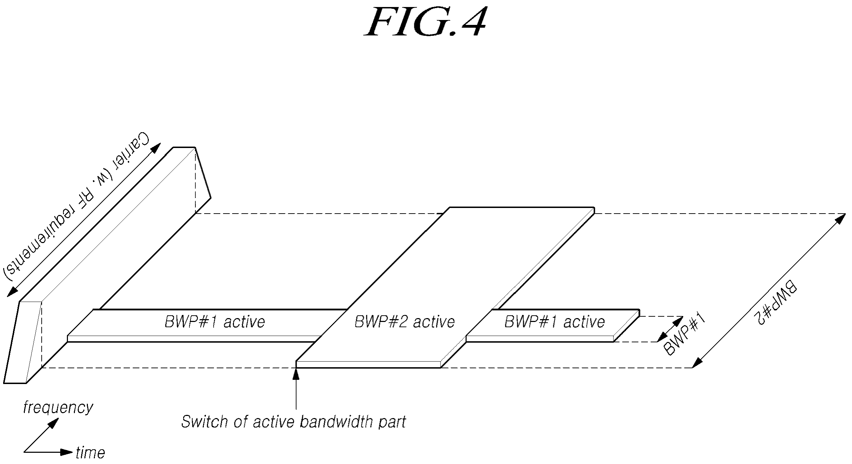

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

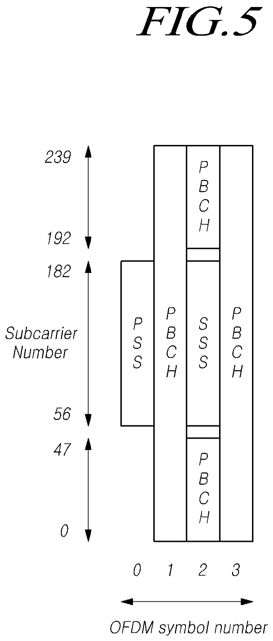

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

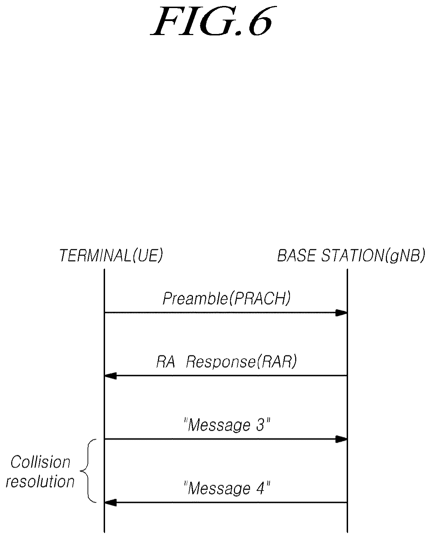

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

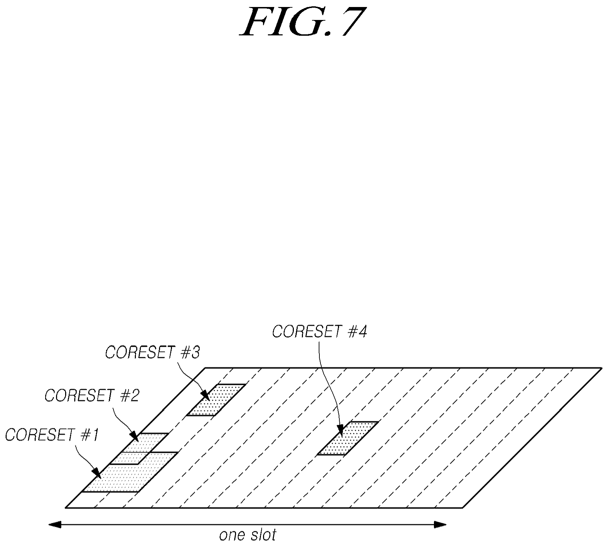

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

### Wider bandwidth operations

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC.

However, the NR is designed to support the UE of NR having different transmission/reception bandwidth capabilities over a single wideband NR CC. Accordingly, it is required to configure one or more bandwidth parts (BWPs) including subdivided bandwidths for an NR CC, thereby supporting a flexible and wider bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part to use the same for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

Hereinafter, a method for performing random access procedure in an Ambient IoT environment is described with reference to the accompanying drawings.

The present disclosure provides, in an Ambient Internet of Things (Ambient IoT or A-IoT) system of a 3GPP (3rd Generation Partnership Project) radio access network (hereinafter referred to as '5G' or 'NR [New Radio]' in the present disclosure) or a next-generation radio access network (hereinafter referred to as '5G-Advanced or 6G' in the present disclosure), a method by which an Ambient IoT terminal (also referred to as an Ambient IoT device or Ambient IoT apparatus in the present disclosure) determines a random access type, and methods for configuring and transmitting paging and R2D messages transmitted by a reader (also referred to as a reader device in the present disclosure) or a base station for that purpose.

In recent years, IoT technology has attracted significant attention in wireless communication. IoT technology has been developed to connect an increasing number of objects with one another to improve industrial productivity and enhance quality of life. NB-IoT and eMTC technologies are examples. However, to build a more effective IoT ecosystem, enhancements are needed from various perspectives such as size, form factor, price, complexity, power consumption, and coverage of IoT terminals.

RFID is a representative IoT technology. The advantage of RFID is that it has very low complexity, and an RFID tag has a very small form factor. However, the reading distance of RFID is only a few meters, which results in limited coverage, labor-intensive handheld scanning, and high deployment cost due to the need for RFID portals or gates. Therefore, RFID has limitations in supporting seamless service and coverage in large-scale network.

To satisfy these requirements, research on Ambient IoT technology has been conducted. An Ambient IoT terminal has a smaller form factor than legacy IoT terminals and supports energy harvesting based on battery-less operation with minimal energy storage capability, enabling operation without charging or with minimal recharging. Further, research is being conducted to support wider coverage based on higher power efficiency and to utilize RF signals provided by legacy networks.

In 3GPP, research is being conducted on a protocol stack and signaling procedures in consideration of the low form factor of an Ambient IoT terminal and battery capacity of 1 µW or less, or up to several hundred µW. In particular, for wireless access of an Ambient IoT terminal, a definition is being made for the paging message functionality (as a first message transmitted by a reader or a base station to the Ambient IoT terminal) and for the random access procedure of the Ambient IoT terminal.

In the present disclosure, before an Ambient IoT terminal performs random access, methods are provided for configuring a paging message and for determining a random access type, namely contention-free random access (CFRA) or contention-based random access (CBRA) type.

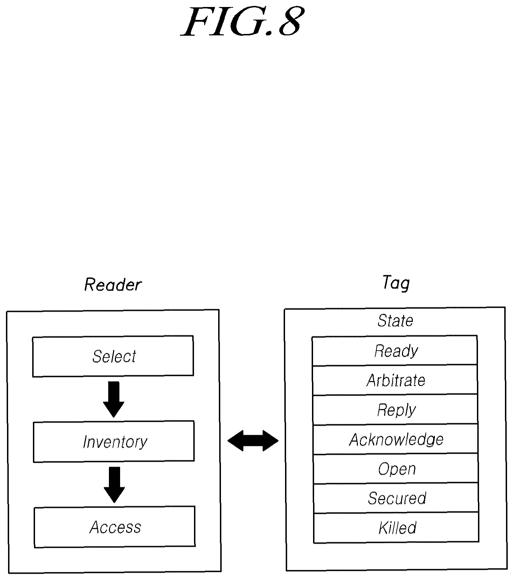

The RFID technology underlying Ambient IoT is defined in the document entitled 'EPC^{™} Radio-Frequency Identity Protocols Generation-2 UHF RFID.' The document defines a protocol between a reader and a tag and employs a slotted-ALOHA-based random access procedure. As shown in FIG. 8, there are three major operations: Select, Inventory, and Access.

A Select operation is a procedure by which a Reader selects one or more tag populations, and includes "Select" and "Challenge" commands. In this case, a Tag enters a Ready state. The Select command is a mandatory operation, and the Challenge command is optional. The Select command allows a Reader to select a set of Tags based on user-defined criteria. An Inventory operation is a procedure in which a Reader identifies/detects each Tag and generates a unique random number based on command/response with each Tag to prepare for Access. An Access operation is a procedure in which a Reader performs mutual communication with each Tag to perform procedures such as Read/Write/Authenticate.

As described above, in recent years, IoT has attracted significant attention in the field of wireless communication. More "things" are expected to be interconnected to improve productivity and increase comfort in daily life. Further reducing the size, complexity, and power consumption of IoT devices enables the deployment of tens or even hundreds of billions of IoT devices for various applications and may provide added value across the entire value chain. Powering all IoT devices with a battery is impractical, and batteries should be manually replaced or recharged, which may result in high maintenance costs, serious environmental problems, and even safety risks for certain use cases (e.g., wireless sensors in the power and oil industry).

Most legacy wireless communication devices are powered by a battery that must be manually replaced or recharged. Automation and digitalization of various industries are opening a new market that requires an IoT technology capable of supporting devices with no energy storage capability or with energy storage that does not require manual replacement or recharging. The form factor of such a device must be sufficiently small to enable effectiveness in the intended use case.

The goal is to capture use cases, traffic scenarios, and device constraints of Ambient power-based IoT and identify new potential service requirements. A case where a device operates without a battery or has limited energy storage capability (e.g., using a capacitor) is being considered, and energy is supplied by harvesting from radio waves, light, movement, heat, or other power sources that may be suitable.

Considering the size and complexity required for practical applications with a device having no energy storage capability or a limited energy storage device that does not require manually replacement or recharging, the output power of an energy harvester is typically between 1µW and several hundred µW. Existing cellular devices may not work well with energy harvesting because peak power consumption is 10mW or higher.

One type of application use case is asset identification, where most industries currently rely primarily on barcodes and RFID. The main advantage of these two technologies is their ultra-low complexity and small form factor of a tag. However, the limited reading range of only a few meters typically requires handheld scanning, resulting in labor-intensive and time-consuming work, or requires the use of RFID portals/gates, resulting in costly deployment. Further, the lack of an interference management scheme causes serious interference and capacity problems between RFID readers, especially when densely deployed. Accordingly, RFID has difficulty supporting seamless coverage in a large-scale network.

TSG RAN has completed a Rel-18 RAN level SI for Ambient IoT, which provides a framework for setting terms and scope for future discussions on Ambient IoT. This work has defined representative use cases, deployment scenarios, connectivity topology, Ambient IoT devices , design goals and required functions, performed initial feasibility assessment, and presented recommendations for sub selection in setting the scope of future WG level studies.

Since legacy technology may not meet all requirements of target use cases, it is recommended that a new IoT technology create a new market within a 3GPP system. This new technology may support connection count and/or device densities tens of times greater than legacy 3GPP IoT technology. A new IoT technology is expected to provide significantly lower complexity and power consumption (by an order of magnitude or more) than legacy 3GPP LPWA technology (e.g., NB-IoT and eMTC) and should address use cases and scenarios that may not be satisfied by legacy 3GPP LPWA IoT technology.

This study aims to further evaluate Ambient IoT at a RAN WG level as a new 3GPP IoT technology suitable for deployment in a 3GPP system. This technology is suitable for ultra-low power IoT applications based on devices with ultra-low power consumption and ultra-low complexity. The study is intended to provide clear differentiation and to address use cases and scenarios that may not be satisfied by legacy 3GPP LPWA IoT technology (e.g., NB-IoT). This includes cases with reduced peak transmission (Tx) power.

In this regard, the overall goal is to study a harmonized air interface design for Ambient IoT to enable the following devices:
~1 µW peak power consumption, having an energy storage device, initial sampling frequency offset (SFO) up to 10X ppm, no DL or UL amplification within the device. UL transmission of the device is backscattered by an externally provided carrier.

Several hundred µW or less peak power consumption, having an energy storage device, initial sampling frequency offset (SFO) up to 10X ppm, having DL and/or UL amplification within the device. UL transmission of the device may be generated within the device or backscattered by an externally provided carrier.

For Topologies 1 & 2 (UE operates as an intermediate node under NW control), no RRC state, no mobility (i.e., no functionality such as cell selection/reselection), no HARQ, no ARQ.

### Deployment scenario according to the table referenced in section 4.2.2 of TR 38.848

For deployment scenario 1 with topology 1, base station and coexistence characteristics: Defined as micro cell, co-site.

For deployment scenario 2 with UE as an intermediate node under network control and topology 2, base station and coexistence characteristics: Defined as macro cell, co-site, with the location of the intermediate node being indoor.

FR1 licensed spectrum (FDD).

In-band spectrum deployment for NR, guard band deployment for LTE/NR, standalone band deployment.

Traffic type: Focus on DO-DTT, DT, rUC1 (indoor inventory) and rUC4 (indoor command).

It evaluates whether DO-A (Device-originated autonomous) use cases may be addressed according to a harmonized air interface design, and will identify which portions of the harmonized air interface design are insufficient for DO-A use cases.

Transmission of an Ambient IoT device (including backscattering when used) may occur at least in UL spectrum.

For DL and UL of Ambient IoT, frame structure, synchronization and timing, random access, numerology, bandwidth, multiple access, waveform and modulation, channel coding, downlink channel/signal aspects, uplink channel/signal aspects, scheduling and timing relationship, study of essential characteristics for a carrier wave externally provided to an Ambient IoT device, etc. are defined. Including interference handling at an Ambient IoT UL receiver and an NR base station. Topology 2 has no difference from topology 1 in physical layer design.

Study and determine necessary functions for a compact protocol stack and lightweight signaling procedure of Ambient IoT to enable DO-DTT and DT data transmission, and study these functions. For example, paging, random access, data transmission, necessary radio resource control aspects are defined, including respecting limitations in a general scope, interaction with higher layers, etc.

Identify impacts on necessary signals and procedures at a CN-RAN interface to enable the following. For example, paging, device context management, data transmission, etc. are defined. Identify RAN architecture aspects including whether split architecture support is needed. Identify potential solutions for locating an Ambient IoT device, which have no specification impact or minimal specification impact on, e.g., reusing existing user location reports or delivering location information to a core network.

Study of coexistence between Ambient IoT and NR/LTE, study of RF requirements for Ambient IoT, where Ambient IoT BS transmission/reception, transmission/reception of an Ambient IoT device, transmission/reception of an intermediate node (UE) are defined.

The disclosure reports on the feasibility of achieving design goals for relevant use cases of a new 3GPP IoT technology, considering suitable deployment scenarios within a 3GPP system and utilizing ultra-low complexity devices for low-power IoT applications. This technology aims to address use cases and scenarios that may not be supported by legacy 3GPP LPWA IoT technology and seeks to provide clear differentiation.

In terms of energy storage, the disclosure considers the following device characteristics: i) a pure battery-less device with no energy storage capability and entirely dependent on the availability of an external energy source, and ii) a device with limited energy storage capability that does not require manual replacement or recharging.

### Connectivity topologies

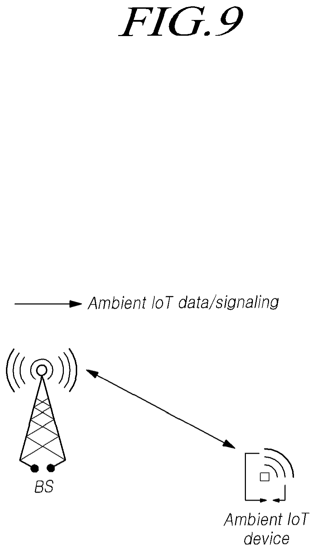

FIGS. 9 to 13 are views illustrating connectivity topology for an Ambient IoT network and device .

The following connectivity topology for an Ambient IoT network and device is described. In all these topologies, an Ambient IoT device may receive a carrier wave from other nodes within or outside the topology. A link of each topology may be bi-directional or unidirectional.

A BS, UE, auxiliary node, or intermediate node may represent one or more BSs or UEs. Indoor/outdoor deployment mixing of these nodes is considered a network implementation choice. The potential impact on device or node complexity should be taken into account. Connectivity topology does not imply the presence of multi-hop auxiliary nodes or intermediate nodes.

Referring to FIG. 9, in topology 1, an Ambient IoT device communicates bi-directionally and directly with a base station. Communication between the base station and the Ambient IoT device includes Ambient IoT data and/or signals. This topology also contemplates the possibility that a base station transmitting to an Ambient IoT device may be different from a base station receiving from the Ambient IoT device.

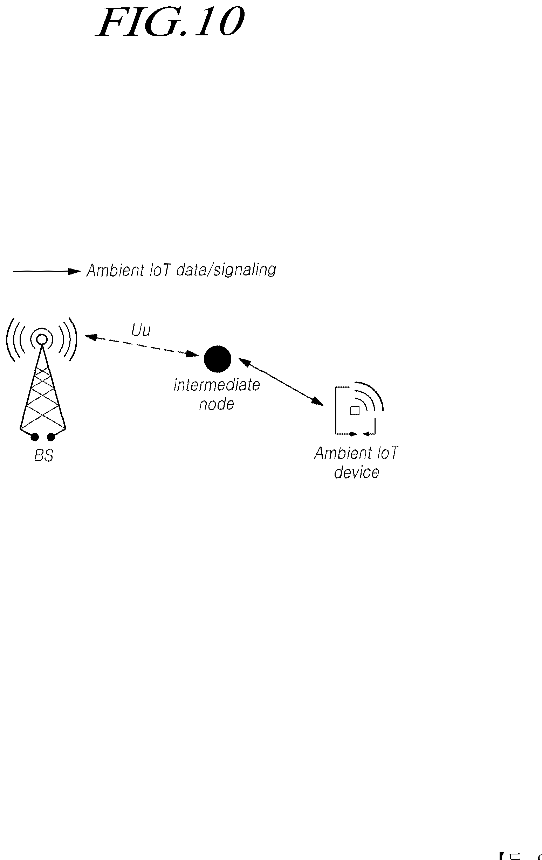

Referring to FIG. 10, in topology 2, an Ambient IoT device communicates bi-directionally with an intermediate node between the device and a base station. In this topology, the intermediate node may be a device capable of supporting Ambient IoT such as a relay, IAB node, UE, repeater, etc. The intermediate node transmits Ambient IoT data and/or signals between the base station and the Ambient IoT device.

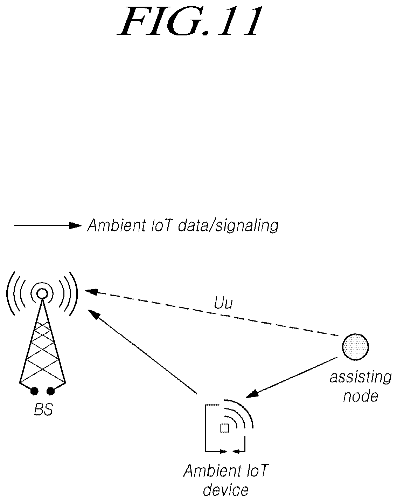

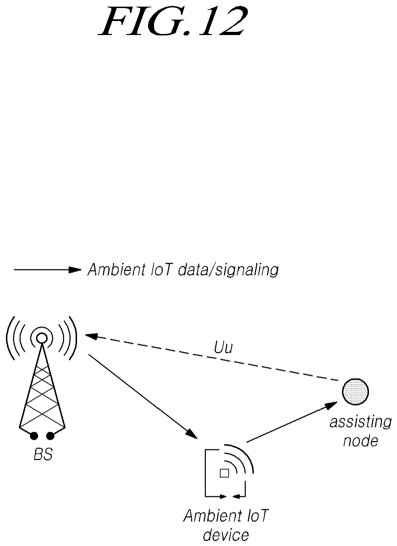

Referring to FIG. 11, in topology 3, an Ambient IoT device transmits data/signals to a base station and receives data/signals from an auxiliary node. Alternatively, referring to FIG. 12, in topology 3, an Ambient IoT device receives data/signals from a base station and transmits data/signals to an auxiliary node. In this topology, the auxiliary node may be a device capable of supporting Ambient IoT such as a relay, IAB, UE, repeater, etc.

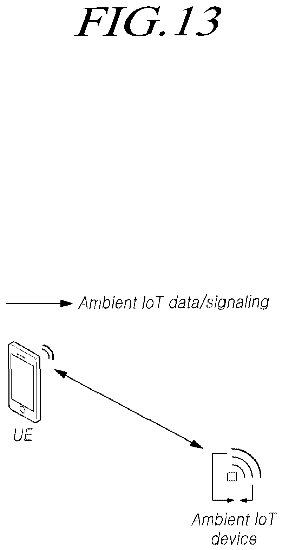

Referring to FIG. 13, in topology 4, an Ambient IoT device communicates bi-directionally with a UE. Communication between the UE and the Ambient IoT device includes Ambient IoT data and/or signals.

### Deployment scenarios

Deployment scenarios are characterized to include: i) an Ambient IoT device is indoor and a base station is indoor; ii) an Ambient IoT device is indoor and a base station is outdoor; iii) an Ambient IoT device is indoor and there is a UE-based reader; iv) an Ambient IoT device is outdoor and a base station is outdoor; and v) an Ambient IoT device is outdoor and there is a UE-based reader.

### Device categorization

In the disclosure, an Ambient IoT device is characterized according to its energy storage capacity and its capability to generate RF signals for transmission. A device is assumed to have no energy storage at all or a limited energy storage capability.

Based on this storage capacity, the disclosure considers the following set of Ambient IoT devices:
Device A: No energy storage, no independent signal generation/amplification, i.e., backscattering transmission.
Device B: With energy storage, no independent signal generation, i.e., backscattering transmission. Use of stored energy may include amplification of a reflected signal.
Device C: With energy storage, with independent signal generation, i.e., active RF components for transmission.

Limited energy storage may differ between implementations within Device B or between implementations within Device C, and there may also be differences between Device B and Device C. This storage capacity is generally expected to be several times smaller than the storage capacity included in an NB-IoT device. Devices A, B, C may demodulate control, data, etc. from relevant entities of a RAN according to connectivity topology.

### Protocol stack and signaling procedures

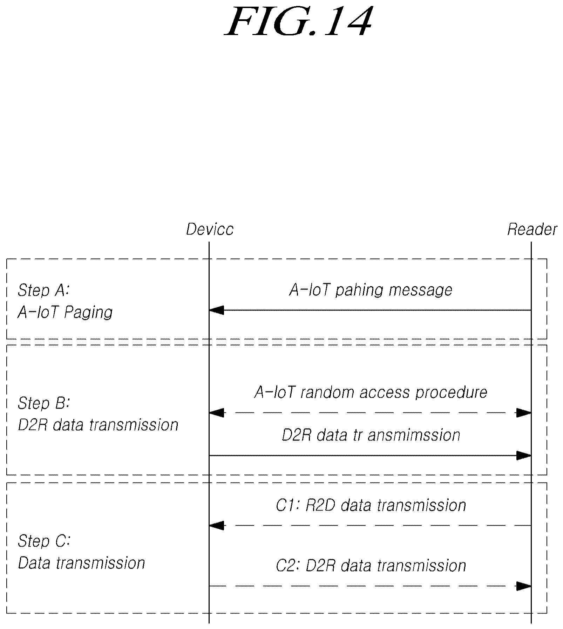

FIG. 14 is a view illustrating general operations between an Ambient IoT terminal and a reader according to an embodiment.

Step A: A-IoT paging. Based on a service request, the reader transmits an A-IoT paging message indicating a terminal that is to respond.

Step B: D2R data transmission. A triggered A-IoT terminal performs transmission of a terminal ID via an A-IoT random access procedure or without using the same.

Step C1: optional R2D data transmission (e.g., command transmission).

Step C2: optional D2R data transmission (e.g., a corresponding response to the command).

### A-IoT Paging Function

At the AS layer, the A-IoT paging function is for indicating a terminal that is to respond. In relation to an A-IoT paging message, an identifier for identifying a terminal or a terminal group may be included in this trigger message.

An A-IoT paging message including an identifier of a single A-IoT terminal.

An A-IoT paging message including a group ID mapped to a plurality of A-IoT terminals.

An A-IoT paging message including no identifier, that is, indicating that all A-IoT terminals capable of receiving the A-IoT paging message are to respond.

An A-IoT paging message including multiple A-IoT terminal identifiers.

In relation to an A-IoT paging message, information by which a terminal can determine a resource to be used in a D2R response message may be further indicated. In relation to an A-IoT terminal paging function, an existing NR paging message, an existing paging occasion, and an existing DRX may not be supported.

### A-IoT Random Access Procedure

An A-IoT random access procedure is defined as a procedure used by an A-IoT terminal to access a network for data transmission. The A-IoT random access is triggered by a reader and includes triggering access for a single A-IoT terminal, a group of A-IoT terminals, or all A-IoT terminals within coverage of the reader.

A basic scheme of an A-IoT random access procedure is slotted-ALOHA.

When an A-IoT terminal is selected to respond, the A-IoT terminal performs the following procedure.

Step 1: determining a random access type and an access occasion/resource.

When the random access is a contention-free random access, a designated D2R occasion/resource is selected, a contention resolution of Step 2 is omitted, and data transmission of Step 3 is performed. When the random access is a contention-based random access, determination and selection of an access occasion/resource are performed, and the contention resolution procedure of Step 2 is performed.

Step 2: contention resolution of contention-based random access.

Solution 1: A-IoT Msg1 without data.

A-IoT Msg1: when an A-IoT terminal identifies a start of its access occasion, the A-IoT terminal transmits a random ID generated by the A-IoT terminal to the reader.

A-IoT Msg2: the reader responds with the random ID successfully received. When the A-IoT terminal receives A-IoT Msg2 including the same random ID that the A-IoT terminal has previously transmitted, contention resolution is regarded as successful.

Solution 2: A-IoT Msg1 including data.

A-IoT Msg1: when an A-IoT terminal identifies a start of its access occasion, the A-IoT terminal transmits an A-IoT Msg1 including a terminal ID and/or other higher layer data.

A-IoT Msg2: the reader may respond with the information successfully received. When the A-IoT terminal receives A-IoT Msg2 including information that is a response to its transmission, contention resolution is regarded as successful.

Step 3: data transmission.

After it is determined that contention resolution has been successful when contention-based random access is used, or when contention-free access is used, the terminal may perform higher layer data transmission with the reader, the higher layer data transmission including a terminal ID and/or other higher layer data.

Hereinafter, a method of an Ambient IoT terminal to perform random access procedure is described with reference to the accompanying drawings.

In the disclosure, an Ambient IoT device may be used with various terms such as terminal, Ambient IoT terminal, A-IoT terminal, Ambient IoT device, IoT device, IoT terminal, etc. Further, a reader may be used with various terms such as reader device, base station, intermediate node, general terminal and may include a base station of the above-mentioned topology 1 or an intermediate node of topology 2, e.g., a UE. Further, a carrier wave node (CW node) is a device that transmits a carrier wave for energy harvesting and may include a base station, reader, or CW node. Further, in representing a link between a reader and an Ambient IoT device, transmission from a reader to an Ambient IoT device is referred to as R2D transmission, and conversely, transmission from an Ambient IoT device to a reader is referred to as D2R transmission. Further, a physical channel for R2D transmission is referred to as PRDCH (Physical Reader-to-Device Channel), and a physical channel for D2R transmission is referred to as PDRCH (Physical Device-to-Reader Channel). However, these terms are merely illustrative and are not limited thereto, and the technical spirit of the disclosure may be expressed using other terms as long as they are applied substantially identically.

An Ambient IoT terminal may be classified into three types as shown in Table 2 below.

**[Table 2]**

| | Device Type | Energy Storage | Peak Power Consumption | Amplification | UL Independent signal generation | UL Tx method |
|---|---|---|---|---|---|---|
| Passive | Device 1 | Yes | ≤ 1 µW | No | No | Backscattering from external CW |
| | Device 2a | Yes | ≤ a few hundred µW | Yes (DL and/or UL) | No | Backscattering from external CW |
| Active | Device 2b | Yes | ≤ a few hundred µW | Yes (DL and/or UL) | Yes | Generated internally |

In Table 2, a difference between Passive and Active depends on whether the Ambient IoT device includes an independent signal generation function and hardware. When there is no independent signal generation function for uplink signal transmission, it is defined as Passive. When such an independent signal generation function is present, it is defined as Active.

A maximum power consumption of Device 1 is not more than 1 µW, and it does not have an independent signal generation function and an amplification function. In addition, an uplink of the Ambient IoT terminal is transmitted by backscattering of an external carrier wave signal. A maximum power consumption of Device 2a is not more than several hundred µW, and it does not support independent signal generation but supports UL/DL amplification. In addition, the uplink is transmitted by backscattering of an external carrier wave signal. A maximum power consumption of Device 2b is not more than several hundred µW, and it supports independent signal generation and UL/DL amplification. In addition, the uplink is transmitted through internally generated signals.

Meanwhile, a common feature of Device 1, Device 2a, and Device 2b discussed thus far in 3GPP is that each Ambient IoT terminal includes an internal energy storage component. However, the Ambient IoT terminal may have only limited capacity, depending on the topology and deployment scenario. In this case, the limited energy storage refers to a storage device such as a small-size capacitor. In order to support seamless communication between a reader and an Ambient IoT device, protocols and signaling procedures to support energy harvesting must be defined.

Although it has been decided to support a paging message at an access stratum (AS) layer between an Ambient IoT terminal and a reader/base station, supporting an existing paging message is difficult; therefore, an A-IoT paging message is defined. The purpose of the A-IoT paging message is to identify Ambient IoT terminal(s) so that the Ambient IoT terminal(s) select/determine a radio resource and transmit a D2R (Device-to-Reader) response message to the reader.

In order to identify A-IoT device(s), the paging message may include types of identifier information in a form as shown in Table 3.

**[Table 3]**

| Cases | Information type | Reception target |
|---|---|---|
| Case 1 | Single A-IoT device ID | A single A-IoT device |
| Case 2 | Group ID | A plurality of A-IoT devices mapped to the Group ID |
| Case 3 | No ID-related information | All A-IoT devices that receive the A-IoT paging message |
| Case 4 | Multiple A-IoT device IDs | multiple A-IoT device IDs |

In relation to the above-described method for selecting/determining a radio resource for D2R transmission of the Ambient IoT terminal, it may also be defined how (implicit/explicit/configured/preconfigured) or through which resource (dedicated/shared) the D2R transmission is to be performed.

Meanwhile, with respect to a random access procedure of the Ambient IoT terminal(s), a slotted-ALOHA random access procedure has been adopted as a default. A contention-based (CBRA) and a contention-free (CFRA) access procedure may be defined for a single terminal, a group of terminals, or all terminals. In addition, a "4-step," "3-step," and "2-step" random access type procedure based on CBRA and CFRA may also be defined.

Hereinafter, it will be described which type of random access the Ambient IoT terminal(s) select/determine in a random access process, and what information is required in a paging message and an R2D message for random access selection.

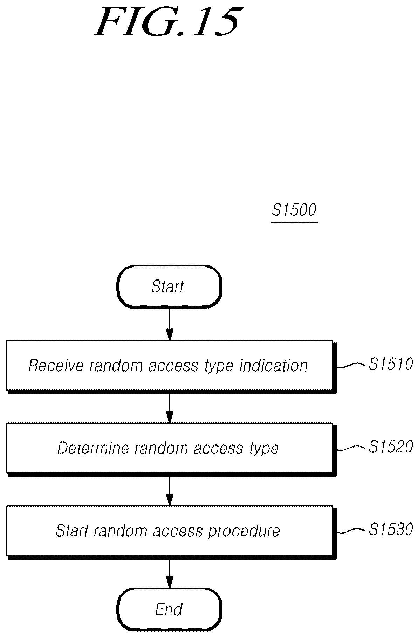

FIG. 15 is a flowchart illustrating a method (1500) of an Ambient IoT terminal for performing random access according to an embodiment.

Referring to FIG. 15, the Ambient IoT terminal may receive random access type indication information from a reader device (S1510).

The Ambient IoT terminal may receive random access type indication information from a reader device for determining one of CBRA (contention-based random access) and CFRA (contention-free random access) as a random access type. In one example, the random access type indication information may include information indicating one of the contention-based random access (CBRA) and the contention-free random access (CFRA).

In one example, the random access type indication information may be received as included in a paging message. For example, the random access type indication information may be included, in a bit form or a predetermined integer value, in a frame, subframe, slot, or symbol in which a paging message and a paging occasion are included or configured. In another example, the random access type indication information including CFRA or CBRA may be received through a PRDCH, RCI (R2D Control Information), higher-layer signaling, or a MAC CE. Alternatively, the random access type indication information may be included in a preamble, a midamble, or a postamble of a predetermined R2D message.

In one example, the reader device may include a base station, an intermediate node, or a terminal (UE). In a topology 1, where communication is directly performed between a base station and an Ambient IoT terminal, the reader device may be the base station. In a topology 2, where an intermediate node is present between the base station and the Ambient IoT terminal, the reader device may be the intermediate node.

In one example, when the reader device is an intermediate node, the random access type indication information may be configured based on a paging command received from a base station. That is, a paging command including the random access type indication information may be received from the base station of the network. The intermediate node may transmit the random access type indication information to the Ambient IoT terminal based on the random access type indication information contained in the received paging command.

In this case, the paging command may be received at the intermediate node through any one of a PHY layer message, a MAC layer message, and an RRC layer message. In addition, the random access type indication information may be received by the Ambient IoT terminal as included in a paging message.

In another example, instead of directly indicating a contention-based random access and a contention-free random access, the random access type indication information may include Ambient IoT terminal ID information or Ambient IoT terminal ID type information.

In this case, the Ambient IoT terminal ID information may be one of a single Ambient IoT terminal ID, multiple Ambient IoT terminal IDs, a group ID, or no ID information. Alternatively, Ambient IoT terminal ID type information may be further included together with the Ambient IoT terminal ID information. In one example, the Ambient IoT terminal ID type information may be in a predetermined integer form or a bit form.

Referring again to FIG. 15, the Ambient IoT terminal may determine a random access type (S1520) based on random access type indication information and may start a random access procedure according to the random access type (S1530).

The Ambient IoT terminal may determine one of CFRA and CBRA according to information indicated in the random access type indication information received from a base station or an intermediate node. That is, in one example, the Ambient IoT terminal may decode a paging message and random access type indication information and determine, as the random access type, one of CBRA and CFRA that is indicated.

In another example, when a paging message includes Ambient IoT terminal ID information or Ambient IoT terminal ID type information, the Ambient IoT terminal may implicitly determine the random access type based on the Ambient IoT terminal ID information or the Ambient IoT terminal ID type information.

For example, when the Ambient IoT terminal ID information or the Ambient IoT terminal ID type information has ID information that designates each Ambient IoT terminal, such as a single or multiple Ambient IoT device IDs, the Ambient IoT terminal may determine the random access type as a CFRA type. Alternatively, when the Ambient IoT terminal ID information or the Ambient IoT terminal ID type information is a group ID or when device ID information does not exist, the Ambient IoT terminal that has received the message may determine the random access type as a CBRA type. Alternatively, the Ambient IoT terminal may determine the random access type based on a predetermined random access type determination mapping table.

After the Ambient IoT terminal determines the random access type, a random access procedure is triggered and the Ambient IoT terminal may transmit a D2R (Msg1) message. Thereafter, the Ambient IoT terminal may continue to perform a predetermined random access procedure.

According to the embodiments described above, a random access procedure may be performed efficiently in an Ambient IoT environment. Further, wireless random access between A-IoT terminals and a reader may be performed more efficiently in an Ambient IoT environment. Specifically, the A-IoT terminals may efficiently determine, as a wireless access type, one of CBRA (contention-based random access) and CFRA (contention-free random access) based on information in a first R2D message received from the reader.

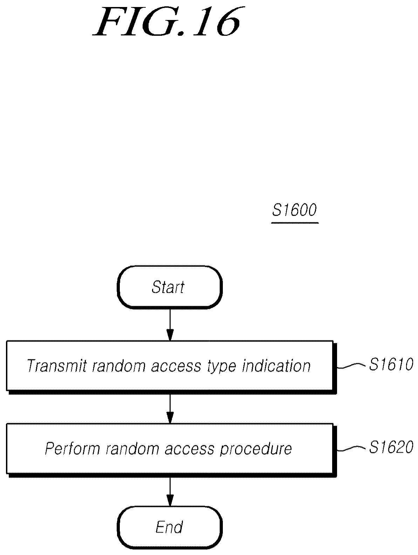

FIG. 16 is a flowchart illustrating a method (1600) of a reader to perform random access according to an embodiment. Description set forth above with reference to FIG. 15 may be omitted to avoid redundancy, and, in this case, the omitted contents are understood to apply equally to the reader, provided that they do not depart from the technical spirit of the disclosure.

Referring to FIG. 16, the reader device may transmit random access type indication information to the Ambient IoT terminal (S1610).

The reader device may transmit random access type indication information to the Ambient IoT terminal for determining one of CBRA (contention-based random access) and CFRA (contention-free random access) as a random access type. In one example, the random access type indication information may include information indicating one of the contention-based random access (CBRA) and the contention-free random access (CFRA)."

In one example, the random access type indication information may be transmitted as included in a paging message. For example, the random access type indication information may be included, in a bit form or a predetermined integer value, in a frame, subframe, slot, or symbol in which a paging message and a paging occasion are included or configured. In another example, the random access type indication information including CFRA or CBRA may be transmitted through a PRDCH, RCI (R2D Control Information), higher-layer signaling, or a MAC CE. Alternatively, the random access type indication information may be included in a preamble, a midamble, or a postamble of a predetermined R2D message.

In one example, the reader device may include a base station, an intermediate node, or a terminal (UE). I n a topology 1, where communication is directly performed between a base station and an Ambient IoT terminal, the reader device may be the base station. In a topology 2, where an intermediate node is present between the base station and the Ambient IoT terminal, the reader device may be the intermediate node.

In one example, when the reader device is an intermediate node, the random access type indication information may be configured based on a paging command received by the reader device from a base station. That is, a paging command including the random access type indication information may be received by the intermediate node from the base station of the network. The intermediate node, acting as a reader, may transmit the random access type indication information to the Ambient IoT terminal based on the random access type indication information in the received paging command.

In this case, the paging command may be transmitted to the intermediate node through any one of a PHY layer message, a MAC layer message, and an RRC layer message. In addition, the random access type indication information may be transmitted to the Ambient IoT terminal as included in a paging message.

In another example, instead of directly indicating a contention-based random access and a contention-free random access, the random access type indication information may include Ambient IoT terminal ID information or Ambient IoT terminal ID type information.

In this case, the Ambient IoT terminal ID information may be one of a single Ambient IoT terminal ID, multiple Ambient IoT terminal IDs, a group ID, or no ID information. Alternatively, Ambient IoT terminal ID type information may be further included together with the Ambient IoT terminal ID information. In one example, the Ambient IoT terminal ID type information may be in a predetermined integer form or a bit form.

Referring again to FIG. 16, the reader device may start a random access procedure according to the random access type determined based on the random access type indication information (S1620).

According to the random access type indication information received from the reader device, the Ambient IoT terminal may determine one of CFRA and CBRA. That is, in one example, the Ambient IoT terminal may decode a paging message and the random access type indication information and determine, as the random access type, one of CBRA and CFRA that is indicated.

In another example, when a paging message includes Ambient IoT terminal ID information or Ambient IoT terminal ID type information, the Ambient IoT terminal may implicitly determine the random access type based on the Ambient IoT terminal ID information or the Ambient IoT terminal ID type information.

For example, when the Ambient IoT terminal ID information or the Ambient IoT terminal ID type information has ID information that designates each Ambient IoT terminal, such as a single or multiple Ambient IoT device IDs, the Ambient IoT terminal may determine the random access type as a CFRA type. Alternatively, when the Ambient IoT terminal ID information or the Ambient IoT terminal ID type information is a group ID or when device ID information does not exist, the Ambient IoT terminal that has received the message may determine the random access type as a CBRA type. Alternatively, the Ambient IoT terminal may determine the random access type based on a predetermined random access type determination mapping table.

After the Ambient IoT terminal determines the random access type, a random access procedure is triggered and the Ambient IoT terminal may transmit a D2R (Msg1) message. The reader device may transmit an R2D (Msg2) message in response to the D2R message received from the Ambient IoT terminal. Thereafter, the reader device may continue to perform a predetermined random access procedure with the Ambient IoT terminal.

According to the embodiments described avove, a random access procedure may be performed efficiently in an Ambient IoT environment. Further, wireless random access between A-IoT terminals and a reader may be performed more efficiently in an Ambient IoT environment. Specifically, the A-IoT terminals may efficiently determine, as a wireless access type, one of CBRA (contention-based random access) and CFRA (contention-free random access) based on information in a first R2D message received from the reader.

Hereinafter, each embodiment related to a method for performing a random access procedure in an Ambient IoT environment is described with reference to the the accompanying drawings.

The present disclosure provides a scheme for enabling Ambient IoT device(s) to determine a random access type such as CBRA or CFRA and to trigger a random access procedure. For determination of the random access type, the reader explicitly includes a random access type (CBRA or CFRA) indication in an R2D message such as a paging message and/or a PRDCH and/or a preamble and/or a midamble and/or a postamble and transmits the R2D message, whereby the Ambient IoT device(s) can identify the random access type to be selected.

In addition, the present disclosure provides a method in which the Ambient IoT device(s) implicitly determine the random access type through an identifier or ID information of the Ambient IoT device(s) included in a paging message, which is a first message transmitted by the reader to the Ambient IoT device(s).

In addition, the present disclosure provides a method in which the Ambient IoT device(s) implicitly determine the random access type through an identifier or ID information of the Ambient IoT device(s) included in a paging message, which is a first message transmitted by the reader to the Ambient IoT device(s).

The present disclosure provides a scheme for determining an RA (random access) type to be performed before the Ambient IoT device(s) perform RA. Two methods are provided: i) a method of determining the RA type according to an explicit indication of a reader or a base station, and ii) a method of implicitly determining the RA type through Ambient IoT device ID-related information received by the Ambient IoT device(s) from the reader or the base station.

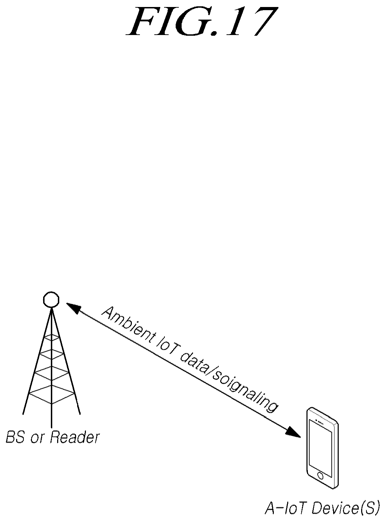

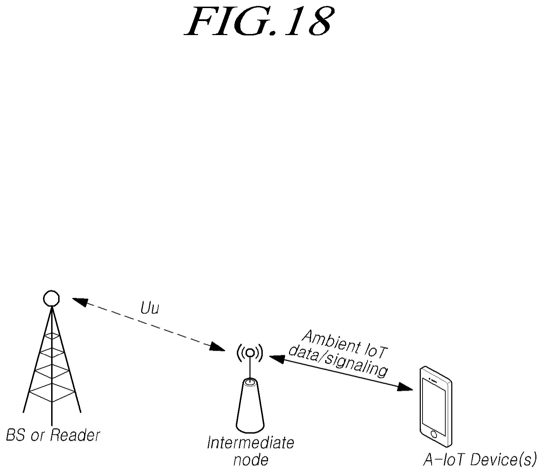

First, examples of topologies to which the method for determining an RA type of an Ambient IoT device, as proposed in the present disclosure, may be applied are illustrated in FIGS. 17 and 18 below. FIGS. 17 and 18 are views illustrating an Ambient IoT topology according to an embodiment.

The method for determining the RA type of the Ambient IoT device(s) can be classified into two cases: i) an explicit method and ii) an implicit method, as described below.
- Case 1. RA type determination based on RA type indication (CBRA or CFRA) information in a paging message.

The RA type indication information may be included in a preamble, a midamble, or a postamble in addition to the paging message.
- Case 2. RA type determination based on A-IoT device ID setting information type in a paging message.

Option 1: based on an A-IoT device identifier and/or ID information.

Option 2: based on an A-IoT device identifier and/or ID type information.

### Case 1. Inclusion of RA type indication information in a paging message and a slot (explicit).

A reader and/or a base station may explicitly include RA type indication information, such as CBRA or CFRA, in an A-IoT paging (query) message and transmit the paging message to Ambient IoT device(s). In this case, the Ambient IoT device(s) that receive the paging message can determine their RA type. For example, the RA type indication information may be included, in a bit form, in a frame, subframe, slot, or symbol unit where a paging message and a paging occasion are included or configured. The RA type indication information including CFRA or CBRA may also be included, in addition to the paging message, in a PRDCH, an RCI (R2D Control Information), an upper (higher) layer, a MAC, or a preamble, a midamble, or a postamble.

The Ambient IoT device(s) that have received the RA type indication may transmit a D2R (Msg1) message to the reader after determining the RA type.

### Case 2. RA type determination based on A-IoT device ID setting information type in a paging message.

### Option 1: based on an A-IoT device identifier and/or ID information.

An A-IoT paging message transmitted by a reader and/or a base station to A-IoT device(s) may include an identifier or ID information capable of identifying the A-IoT device(s) or may not include such information. Based on a type of A-IoT device ID setting information in the paging message, as shown in Table 4 below, the A-IoT device(s) may determine their RA type as one of CBRA and CFRA, at least implicitly or by comparing with a configured/preconfigured RA type decision mapping table. The A-IoT device(s) may transmit a D2R (Msgl) to the reader after the RA type decision.

**[Table 4]**

| A-IoT device ID information in a paging message | RA Type decision |
|---|---|
| Single A-IoT device ID | CFRA |
| Multiple A-IoT device IDs | |
| Group ID | CBRA |
| No ID-related information | |

When the A-IoT device ID(s) information type is a single A-IoT device ID (e.g., {0001···}) or multiple A-IoT device IDs (e.g., {0001···}, {0010···}, ...), because necessary information for each ID is included for one or more A-IoT devices, a CFRA RA type rather than a contention-based (CBRA) RA type may be selected implicitly or based on a configured/preconfigured RA type decision table. For example, each A-IoT device may determine resources required for transmission of a response message, that is, a D2R (Device-to-Reader, Msg1) message, based on the ID information in the received paging message, and thus may select a CFRA RA type rather than a contention-based (CBRA) RA type.

When the A-IoT device ID(s) information type in the paging message is a group ID (e.g., {0101···}) or when A-IoT device ID-related information is not included, the A-IoT device(s) that have received the paging message may select a CBRA (contention-based) RA type implicitly or based on a configured/preconfigured RA type decision mapping table.

When the A-IoT device ID is a group ID, all A-IoT device(s) mapped to the group ID need to select radio resources required for transmission of a D2R (Msg1) response message and may select a CBRA RA type to minimize collisions.

Similarly, when A-IoT device ID information is not included, all A-IoT device(s) capable of receiving the A-IoT paging message need to transmit a D2R (Msg1) response message and to select resources required for the transmission. In order to minimize radio resource collisions among A-IoT devices during D2R transmission, the A-IoT devices may select a CBRA RA type.

The A-IoT device ID information may also be included, in addition to the paging message, in a PRDCH, an RCI (R2D Control Information), an upper (higher) layer, a MAC, a preamble, a midamble, or a postamble.

### Option 2: based on an A-IoT device identifier and/or ID type information.

A new information field for distinguishing an A-IoT device ID type may be added in an A-IoT paging message transmitted by a reader and/or a base station to A-IoT device(s). Tables 5, 6, and 7 below are examples of RA type decision tables according to the information field, by which an A-IoT device implicitly determines an RA type based on the A-IoT device ID type information included in the paging message.

An information field for distinguishing an A-IoT device ID type may be represented at least as a value in the form of an integer, a bit, or an enumerated parameter. After receiving and decoding a paging message, the A-IoT device may check which type the A-IoT device ID is, determine an RA type based on the type, and perform D2R (Msg1) transmission. The A-IoT device ID type information field may be included, in addition to the paging message, in at least an RCI (R2D Control Information), an upper (higher) layer, a MAC, a preamble, a midamble, a postamble, or a PRDCH, as described above for Case 1 and Option 1 of Case 2.

**[Table 5]**

| A-IoT device ID type information field (Integer) | RA Type decision |
|---|---|
| 0 (=Single A-IoT device ID) | CFRA |
| 1 (Multiple A-IoT device IDs) | |
| 2 (=Group ID) | CBRA |
| 3 (= no ID-related information) | |

**[Table 6]**

| A-IoT device ID type information field (bit) | RA Type decision |
|---|---|
| 00 (=Single A-IoT device ID) | CFRA |
| 01 (=Multiple A-IoT device IDs) | |
| 10 (=Group ID) | CBRA |
| 11 (= no ID-related information) | |

**[Table 7]**

| A-IoT device ID type information field (Enumerated) | RA Type decision |
|---|---|
| single_Id (=Single A-IoT device ID) | CFRA |
| multiple_Id (Multiple A-IoT device IDs) | |
| group_Id (=Group ID) | CBRA |
| no_Id (= no ID-related information) | |

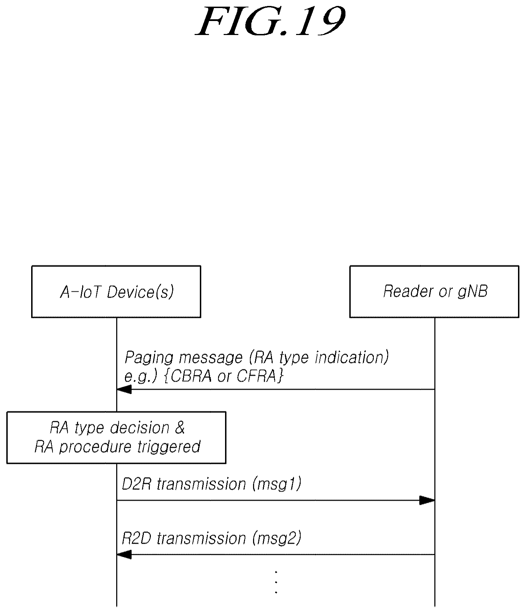

FIG. 19 is a view illustrating a random access procedure according to an indicated random access type in topology 1 according to an embodiment.

FIG. 19 shows an example procedure between [A-IoT device] and [reader] for Case 1 in a topology 1 scenario. Although a 2-step RA is assumed, the procedure may also be applied to 3-step and 4-step RA. Operations for the embodiment are as follows.

### [A-IoT Device operation]

- 1. The A-IoT device receives RA type indication information from the base station/reader through at least the following message in addition to a paging message.

The RA type indication information indicates CBRA or CFRA and may be configured at least in the form of a bit, an integer, or an enumerated parameter.

By defining at least an RCI (R2D Control Information), a higher (upper) layer, a PHY layer, a MAC CE, a preamble, a midamble, or a postamble in addition to the paging message, the RA type indication information may be included in the message and delivered to the A-IoT device.
- 2. The A-IoT device(s) determine an RA type based on the RA type indication information.

The A-IoT device(s) decode the message and the RA type indication information and determine one RA type, either CBRA or CFRA, that is indicated.
- 3. After determining the RA type, the A-IoT device(s) trigger a random access procedure and transmit a D2R (Msg1) message.

### [Reader operation]

- 1. The base station/reader transmits RA type indication information to the A-IoT device(s) through at least the following message in addition to a paging message.

Examples of messages and information fields in which the RA type indication information may be included are:
a paging message, an RCI (R2D Control Information), a higher (upper) layer, a PHY layer, a MAC CE, a preamble, a midamble, and a postamble.

The RA type indication information explicitly indicates CBRA or CFRA and may be configured at least in the form of a bit, an integer, or an enumerated parameter.
- 2. The base station/reader transmits an R2D (Msg2) message in response to a D2R message received from the A-IoT device(s).

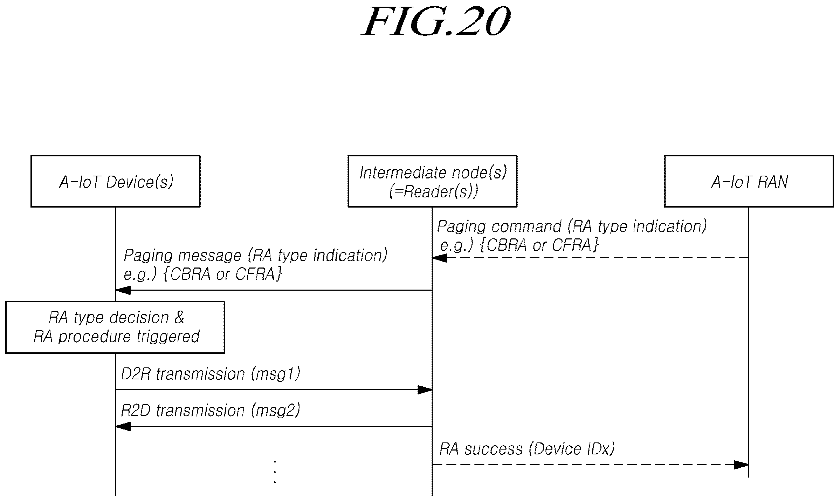

FIG. 20 is a view illustrating a random access procedure according to an indicated random access type in topology 2 according to an embodiment.

FIG. 20 shows an example procedure among [A-IoT device]-[reader]-[A-IoT RAN] for Case 1 in a topology 2 scenario. Although a 2-step RA is assumed, the procedure may also be applied to 3-step and 4-step RA. Operations for the embodiment are as follows.

### [A-IoT Device operation]

- 1. The A-IoT device receives and decodes at least the following message, in addition to a paging message, from the intermediate node/reader to obtain RA type indication information.

The RA type indication information indicates CBRA or CFRA and may be configured at least in the form of a bit, an integer, or an enumerated parameter.

The RA type indication information may be included, in addition to the paging message, in at least an RCI (R2D Control Information), a higher (upper) layer, a PHY layer, a MAC CE, a preamble, a midamble, or a postamble by defining the message and may be delivered to the A-IoT device.
- 2. The A-IoT device(s) determine an RA type based on the RA type indication information.

The A-IoT device(s) decode the message and the RA type indication information and determine one RA type, either CBRA or CFRA, that is indicated.

3. After determining the RA type, the A-IoT device(s) trigger a random access procedure and transmit a D2R (Msg1) message.

### [Reader/Intermediate node operation]

- 1. [Option] The reader may receive a paging command message from the A-IoT RAN.

The paging command may include RA type indication information (CBRA or CFRA) together with A-IoT device ID information.
- 2. The reader transmits RA type indication information to the A-IoT device(s) through at least the following message in addition to a paging message.

Examples of messages and information fields in which the RA type indication information may be included are:
a paging message, an RCI (R2D Control Information), a higher (upper) layer, a PHY layer, a MAC CE, a preamble, a midamble, and a postamble.

The RA type indication information explicitly indicates CBRA or CFRA and may be configured at least in the form of a bit, an integer, or an enumerated parameter.

When a paging command is received from the A-IoT RAN and the paging command includes RA type indication information, the reader may transmit the information to the A-IoT device.
- 3. The reader transmits an R2D (Msg2) message in response to a D2R message received from the A-IoT device(s).
- 4. [Option] The reader may transmit information indicating whether the random access has succeeded or failed, together with an A-IoT device ID, to the A-IoT RAN.

### [A-IoT RAN operation]

- 1. [Option] The A-IoT RAN may transmit a paging command message to the reader.

The paging command may include RA type indication information (CBRA or CFRA) together with A-IoT device ID information.

The paging command message may be transmitted to the intermediate node/reader by defining a PHY layer, a MAC CE, or an RRC message.

A purpose of the paging command is to allow the intermediate node/reader to wake up A-IoT device(s) and to trigger an inventory or a command service.
- 2. The A-IoT RAN may receive information on whether the RA has succeeded or failed from the reader.

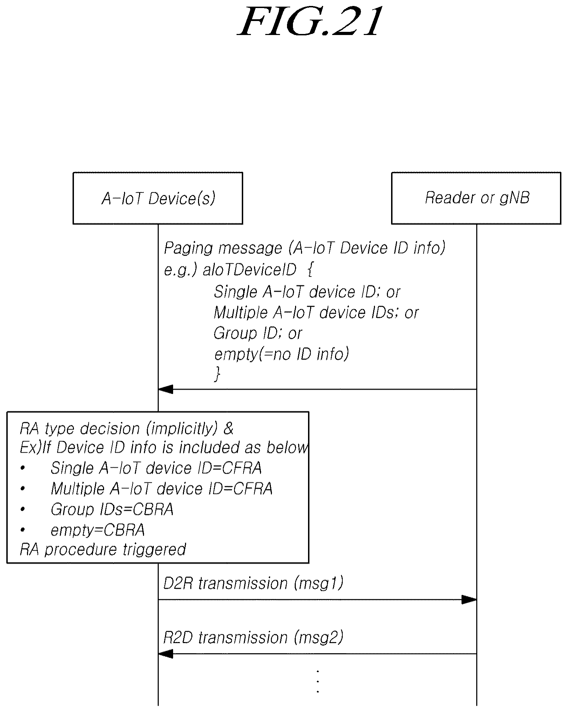

FIG. 21 is a view illustrating a random access procedure based on an A-IoT terminal ID in topology 1 according to an embodiment.

FIG. 21 shows an example procedure between [A-IoT device] and [reader] for Case 2 (Option 1) in a topology 1 scenario. Although a 2-step RA is assumed, the procedure may also be applied to 3-step and 4-step RA. Operations for the embodiment are as follows.

### [A-IoT Device operation]

- 1. The A-IoT device receives and decodes at least the following message, in addition to a paging message, from the base station/reader to obtain A-IoT device ID-related information.

The A-IoT device ID information may be, as described above, one of a single A-IoT device ID, multiple A-IoT device IDs, a group ID, or empty (no ID information).

The A-IoT device ID information may also be included, in addition to the paging message, in at least an RCI (R2D Control Information), a higher (upper) layer, a PHY layer, a MAC CE, a preamble, a midamble, or a postamble by defining the message, and may be delivered to the A-IoT device.

The preamble may be transmitted before the R2D, the midamble may be transmitted in the middle of the R2D, and the postamble may be transmitted at the end of the R2D message, and this may be applied in the same manner to all procedures of the present disclosure.
- 2. The A-IoT device(s) implicitly determine an RA type based on the A-IoT device ID information type.

When the A-IoT device ID information has ID information that designates each device, such as a single or multiple A-IoT device IDs, the A-IoT device determines the RA type as a CFRA type.

When the A-IoT device ID information is a group ID or when device ID information does not exist, the A-IoT device that has received the message determines the RA type as a CBRA type.

The RA type may be implicitly determined according to the A-IoT device ID information type, or may be determined based on a preconfigured or R2D message-configured RA type decision mapping table.
- 3. After determining the RA type, the A-IoT device(s) trigger a random access procedure and transmit a D2R (Msg1) message.

### [Reader operation]

- 1. The base station/reader transmits A-IoT device ID information to the A-IoT device(s) through at least the following message in addition to a paging message.

Examples of messages and information fields in which the A-IoT device ID information may be included are:
a paging message, an RCI (R2D Control Information), a higher (upper) layer, a PHY layer, a MAC CE, a preamble, a midamble, and a postamble.

RA type decision mapping table information according to the A-IoT device ID information type may be included in the candidate R2D message(s)
- 2. The base station/reader transmits an R2D (Msg2) message in response to a D2R (Msg1) message received from the A-IoT device(s).

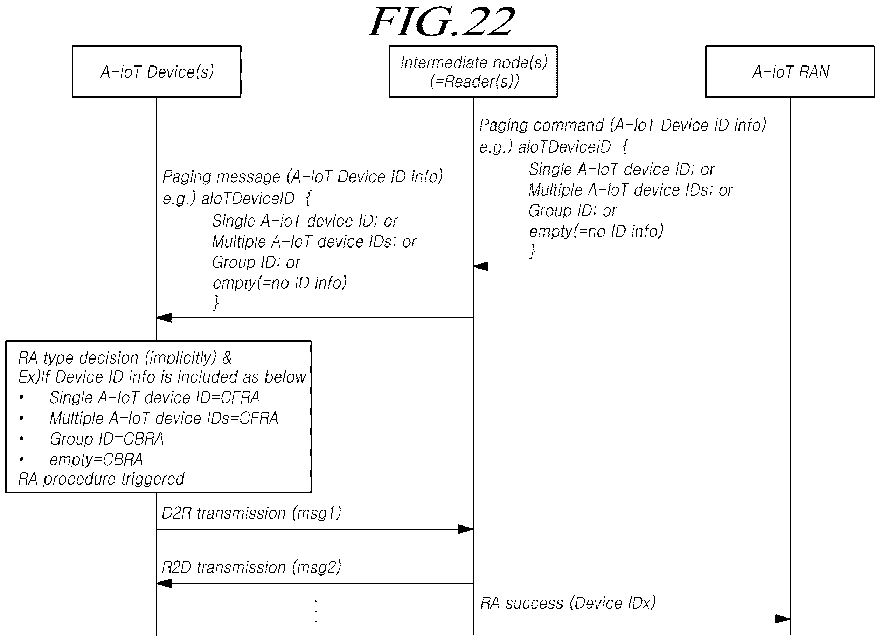

FIG. 22 is a view illustrating a random access procedure based on an A-IoT terminal ID in topology 2 according to an embodiment.

FIG. 22 shows an example procedure among [A-IoT device]-[reader]-[A-IoT RAN] for Case 2 (Option 1) in a topology 2 scenario. Although a 2-step RA is assumed, the procedure may also be applied to 3-step and 4-step RA. Operations for the embodiment are as follows.

### [A-IoT Device operation]

- 1. The A-IoT device receives and decodes at least the following message, in addition to a paging message, from the intermediate node/reader to obtain A-IoT device ID-related information.

The A-IoT device ID information may be, as described above, one of a single A-IoT device ID, multiple A-IoT device IDs, a group ID, or empty (no ID information).

The A-IoT device ID information may also be included, in addition to the paging message, in at least an RCI (R2D Control Information), a higher (upper) layer, a PHY layer, a MAC CE, a preamble, a midamble, or a postamble by newly defining the message, and may be delivered to the A-IoT device.

The preamble may be transmitted before the R2D, the midamble may be transmitted in the middle of the R2D, and the postamble may be transmitted at the end of the R2D message, and this may be applied in the same manner to all procedures of the present disclosure."
- 2. The A-IoT device(s) implicitly determine an RA type based on the A-IoT device ID information type.

When the A-IoT device ID information has ID information that designates each device, such as a single or multiple A-IoT device IDs, the A-IoT device determines the RA type as a CFRA type.

When the A-IoT device ID information is a group ID or when device ID information does not exist, the A-IoT device that has received the message determines the RA type as a CBRA type.

The RA type may be implicitly determined according to the A-IoT device ID information, or may be determined based on a preconfigured or R2D message-configured RA type decision mapping table.
- 3. After determining the RA type, the A-IoT device(s) trigger a random access procedure and transmit a D2R (Msg1) message.

### [Reader/Intermediate node operation]

- 1. [Option] The reader may receive a paging command message from the A-IoT RAN.

The paging command may include A-IoT device ID information.
- 2. The intermediate node/reader transmits A-IoT device ID information to the A-IoT device(s) through at least the following message in addition to a paging message.

Examples of messages and information fields in which the A-IoT device ID information may be included are:
a paging message, an RCI (R2D Control Information), a higher (upper) layer, a PHY layer, a MAC CE, a preamble, a midamble, and a postamble.

RA type decision mapping table information according to the A-IoT device ID information type may be included in the candidate R2D message(s).
- 3. The intermediate node/reader transmits an R2D (Msg2) message in response to a D2R (Msg1) message received from the A-IoT device(s).
- 4. [Option] The intermediate node/reader may transmit information indicating whether the random access has succeeded or failed, together with an A-IoT device ID, to the A-IoT RAN.

### [A-IoT RAN operation]

- 1. [Option] The A-IoT RAN may transmit a paging command message to the reader.

The paging command may include A-IoT device ID information.

The paging command message is a UU interface and may be transmitted to the intermediate node/reader by newly defining a PHY layer, a MAC CE, or an RRC message.

A purpose of the paging command is to allow the intermediate node/reader to wake up the A-IoT device(s) and trigger an inventory or a command service.
- 2. The A-IoT RAN may receive information on whether the RA has succeeded or failed together with the ID information of the A-IoT device from the reader.

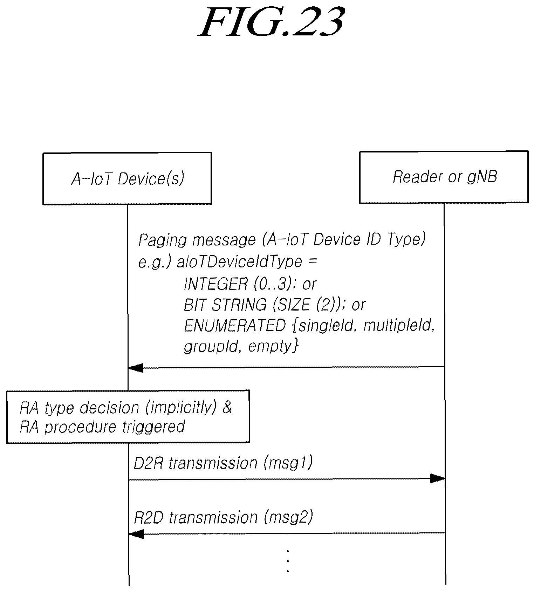

FIG. 23 is a view illustrating a random access procedure based on an A-IoT terminal ID type in topology 1 according to an embodiment.

FIG. 23 shows an example procedure between [A-IoT device] and [reader] for Case 2 (Option 2) in a topology 1 scenario. Although a 2-step RA is assumed, the procedure may also be applied to 3-step and 4-step RA . Operations for the embodiment are as follows.

### [A-IoT Device operation]

- 1. The A-IoT device receives and decodes at least the following message, in addition to a paging message, from the base station/reader to obtain A-IoT device ID type information.

The message may include A-IoT device ID information together with A-IoT device ID type information.

As shown in FIG. 23, the A-IoT device ID type information may be at least in the form of an integer, a bit string, or an enumerated parameter.

The A-IoT device ID type information may also be included, in addition to the paging message, in at least an RCI (R2D Control Information), a higher (upper) layer, a PHY layer, a MAC CE, a preamble, a midamble, or a postamble by defining the message and the information field, and may be delivered to the A-IoT device.

The preamble may be transmitted before the R2D, the midamble may be transmitted in the middle of the R2D, and the postamble may be transmitted at the end of the R2D message, and this may be applied in the same manner to all procedures of the present disclosure.
- 2. The A-IoT device(s) determine an RA type based on the A-IoT device ID type information.

When the A-IoT device ID type information is set as an ID type and information type designating each device, such as a single or multiple A-IoT device IDs, the A-IoT device determines the RA type as a CFRA type according to the examples of Tables 5, 6, and 7 described above.

When the A-IoT device ID information is a group ID or when device ID information does not exist and thus is set as an ID type and information type that cannot designate each device, the A-IoT device determines the RA type as a CBRA type according to the examples of Tables 5, 6, and 7 described above.

The RA type may be determined according to the A-IoT device ID type information, or may be determined based on the RA type decision mapping table (preconfigured or configured through an R2D message) described above.
- 3. After determining the RA type, the A-IoT device(s) trigger a random access procedure and transmit a D2R (Msg1) message.

### [Reader operation]

- 1. The base station/reader transmits A-IoT device ID type information to the A-loT device(s) through at least the following message in addition to a paging message.

Examples of messages and information fields in which the A-IoT device ID type information may be included are:
a paging message, an RCI (R2D Control Information), a higher (upper) layer, a PHY layer, a MAC CE, a preamble, a midamble, a postamble, or a PRDCH message.

RA type decision mapping table information according to the A-IoT device ID type information may be included in the candidate R2D message(s).
- 2. The base station/reader transmits an R2D (Msg2) message in response to a D2R (Msg1) message received from the A-IoT device(s).

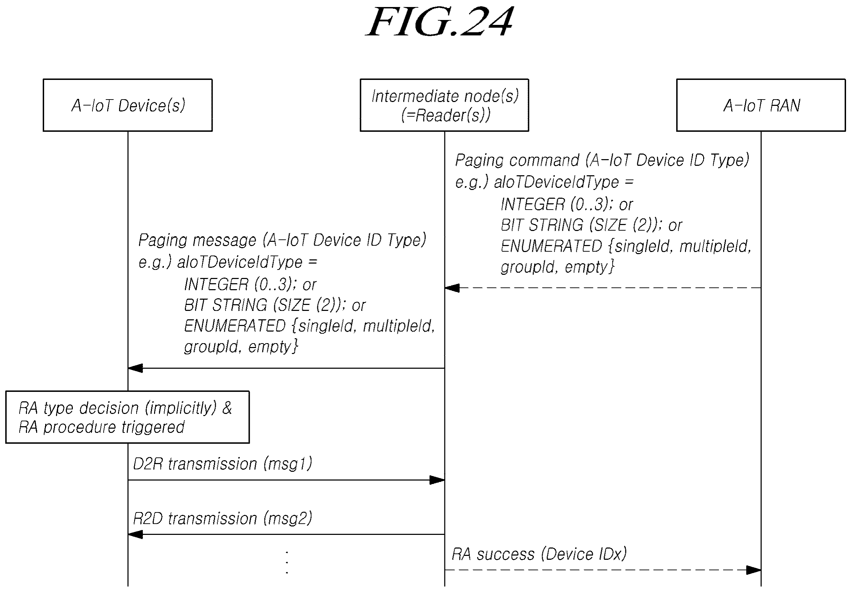

FIG. 24 is a view illustrating a random access procedure based on an A-IoT terminal ID type in topology 2 according to an embodiment.

FIG. 24 shows an example procedure among [A-IoT device]-[reader]-[A-IoT RAN] for Case 2 (Option 2) in a topology 2 scenario. Although a 2-step RA is assumed, the procedure may also be applied to 3-step and 4-step RA. Operations for the embodiment are as follows.

### [A-IoT Device operation]

- 1. The A-IoT device receives and decodes at least the following message, in addition to a paging message, from the intermediate node/reader to obtain A-IoT device ID type information.

The message may include A-IoT device ID information together with A-IoT device ID type information.

As shown in FIG. 24, the A-IoT device ID type information may be at least in the form of an integer, a bit string, or an enumerated parameter.

The A-IoT device ID type information may also be included, in addition to the paging message, in at least an RCI (R2D Control Information), a higher (upper) layer, a PHY layer, a MAC CE, a preamble, a midamble, or a postamble by newly defining the message and the information field, and may be delivered to the A-IoT device.

The preamble may be transmitted before the R2D, the midamble may be transmitted in the middle of the R2D, and the postamble may be transmitted at the end of the R2D message, and this may be applied in the same manner to all procedures of the present disclosure.
- 2. The A-IoT device(s) determine an RA type based on the A-IoT device ID type information.

When the A-IoT device ID type information is set as an ID type capable of designating/distinguishing each device, such as a single or multiple A-IoT device IDs, the A-IoT device determines the RA type as a CFRA type according to the examples of Tables 5, 6, and 7 described above.

A value of the A-IoT device ID type information indicating a single or multiple A-IoT device IDs.

When the A-IoT device ID type information is set as an ID type that cannot designate each device because it is a group ID or because device ID information does not exist, the A-IoT device determines the RA type as a CBRA type according to the examples of Tables 5, 6, and 7 described above.

A value of the A-IoT device ID type information indicating a group ID or empty.

The RA type may be determined according to the A-IoT device ID type information or may be determined based on the RA type decision mapping table (preconfigured or configured through an R2D message) described above.
- 3. After determining the RA type, the A-IoT device(s) trigger a random access procedure and transmit a D2R (Msg1) message.

### [Reader/Intermediate node operation]

- 1. [Option] The reader may receive a paging command message from the A-IoT RAN.

The paging command may include A-IoT device ID type information.
- 2. The intermediate node/reader transmits A-IoT device ID type information to the A-IoT device(s) through at least the following message in addition to a paging message.

Examples of messages and information fields in which the A-IoT device ID type information may be included are:
a paging message, an RCI (R2D Control Information), a higher (upper) layer, a PHY layer, a MAC CE, a preamble, a midamble, a postamble, and a PRDCH.

RA type decision mapping table information according to the A-IoT device ID type may be included in the candidate R2D message(s).
- 3. The intermediate node/reader transmits an R2D (Msg2) message in response to a D2R (Msg1) message received from the A-IoT device(s).
- 4. [Option] The intermediate node/reader may transmit information indicating whether the random access has succeeded or failed, together with an A-IoT device ID, to the A-IoT RAN.

### [A-IoT RAN operation]

- 1. [Option] The A-IoT RAN may transmit a paging command message to the reader.

The paging command may include A-IoT device ID type information.

The paging command message is a UU interface and may be transmitted to the intermediate node/reader by newly defining a PHY layer, a MAC CE, or an RRC message.

A purpose of the paging command is to allow the intermediate node/reader to manage and wake up the A-IoT device(s) and trigger an inventory or a command service.
- 2. The A-IoT RAN may receive information on whether the RA has succeeded or failed together with the ID information of the A-IoT device from the reader.

According to the embodiments described above, wireless random access may be performed more efficiently between A-IoT device(s) and a reader in an A-IoT environment. Specifically, the A-IoT devices may efficiently determine one of CBRA and CFRA, which are types of wireless access, based on information in a first R2D message received from the reader.

With regard to the above-described embodiments, each embodiment is included in the scope of the disclosure according to the disclosure, not only in the case of being independent, but also in the case of all examples constituted of a combination of embodiments.

Configurations of an Ambient IoT terminal and a reader device which may perform all or some of the embodiments described above in connection with FIGS. 1 to 24 are described below with reference to the drawings. The above-described description may be omitted to avoid redundant description and, in that case, the omitted content is understood to apply equally to the following description, provided that it does not depart from the technical spirit of the disclosure.

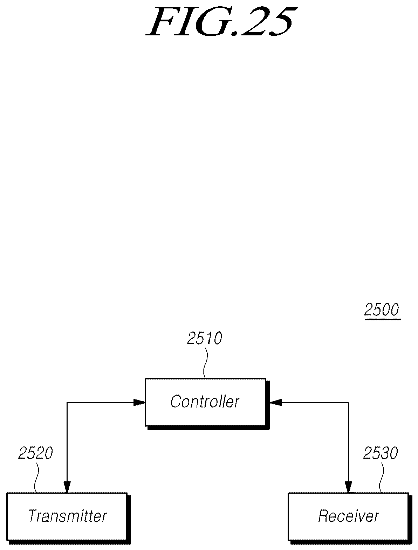

FIG. 25 is a block diagram illustrating an Ambient IoT terminal (2500) according to an embodiment.

Referring to FIG. 25, the Ambient IoT terminal (2500) according to an embodiment includes a transmitter (2520), a receiver (2530), and a controller (2510) configured to control operations of the transmitter and the receiver.

The controller (2510) controls overall operations of the terminal (2500) according to the method of performing a random access procedure necessary to implement the present disclosure described above.

The controller (2510) may receive random access type indication information from a reader device. The controller (2510) may receive random access type indication information from the reader device for determining one of CBRA (contention-based random access) and CFRA (contention-free random access) as a random access type. In one example, the random access type indication information may include information indicating one of the contention-based random access (CBRA) and the contention-free random access (CFRA).

In one example, the random access type indication information may be received as included in a paging message. For example, the random access type indication information may be included, in a bit form or a predetermined integer value, in a frame, subframe, slot, or symbol in which a paging message and a paging occasion are included or configured. In another example, the random access type indication information including CFRA or CBRA may be received through a PRDCH, an RCI (R2D Control Information), higher-layer signaling, or a MAC CE. Alternatively, the random access type indication information may be included in a preamble, a midamble, or a postamble of a predetermined R2D message.

In one example, the reader device may include a base station, an intermediate node, or a terminal (UE). In a topology 1, where communication is directly performed between a base station and an Ambient IoT terminal, the reader device may be the base station. In a topology 2, where an intermediate node is present between the base station and the Ambient IoT terminal, the reader device may be the intermediate node.

In one example, when the reader device is an intermediate node, the random access type indication information may be configured based on a paging command received by the reader device from a base station. That is, a paging command including the random access type indication information may be received by the intermediate node from the base station of the network. The intermediate node may transmit the random access type indication information to the Ambient IoT terminal based on the random access type indication information in the received paging command.

In this case, the paging command may be received at the intermediate node through any one of a PHY layer message, a MAC layer message, and an RRC layer message. In addition, the random access type indication information may be received by the Ambient IoT terminal as included in a paging message.

In another example, instead of directly indicating a contention-based random access and a contention-free random access, the random access type indication information may include Ambient IoT terminal ID information or Ambient IoT terminal ID type information.

In this case, the Ambient IoT terminal ID information may be one of a single Ambient IoT terminal ID, multiple Ambient IoT terminal IDs, a group ID, or no ID information. Alternatively, Ambient IoT terminal ID type information may be further included together with the Ambient IoT terminal ID information. In one example, the Ambient IoT terminal ID type information may be in a predetermined integer form or a bit form.

The controller (2510) determines a random access type based on the random access type indication information and may start a random access procedure according to the random access type. The controller (2510) may determine one of CFRA and CBRA according to information indicated in the random access type indication information received from a base station or an intermediate node. That is, in one example, the controller (2510) may decode a paging message and random access type indication information and determine, as the random access type, one of CBRA and CFRA that is indicated.

In another example, when a paging message includes Ambient IoT terminal ID information or Ambient IoT terminal ID type information, the controller (2510) may implicitly determine the random access type based on the Ambient IoT terminal ID information or the Ambient IoT terminal ID type information.

For example, when the Ambient IoT terminal ID information or the Ambient IoT terminal ID type information has ID information that designates each Ambient IoT terminal, such as a single or a plurality of Ambient IoT device IDs, the controller (2510) may determine the random access type as a CFRA type. Alternatively, when the Ambient IoT terminal ID information or the Ambient IoT terminal ID type information is a group ID or when device ID information does not exist, the controller (2510) that has received the message may determine the random access type as a CBRA type. Alternatively, the controller (2510) may determine the random access type based on a predetermined random access type determination mapping table.

After the controller (2510) determines the random access type, a random access procedure is triggered and the controller (2510) may transmit a D2R (Msg1) message. Thereafter, the controller (2510) may continue to perform a predetermined random access procedure.

According to the embodiment described above, a random access procedure may be performed efficiently in an Ambient IoT environment. Further, wireless random access between A-IoT terminals and a reader may be performed more efficiently in an Ambient IoT environment. Specifically, the A-IoT terminals may efficiently determine, as a wireless access type, one of CBRA (contention-based random access) and CFRA (contention-free random access) based on information in a first R2D message received from the reader.

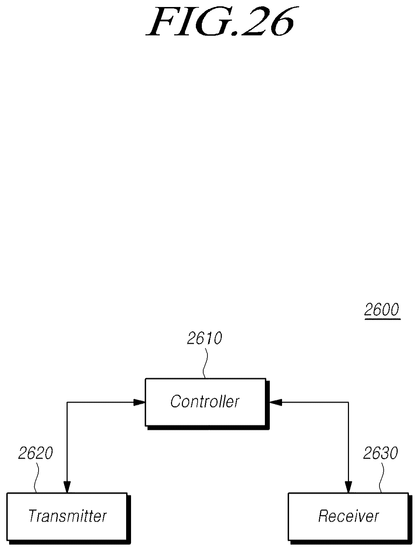

FIG. 26 is a block diagram illustrating a reader device (2600) according to an embodiment.

Referring to FIG. 26, the reader device (2600) according to an embodiment includes a transmitter (2620), a receiver (2630), and a controller (2610) configured to control operations of the transmitter and the receiver.

The controller (2610) controls overall operations of the reader device (2600) according to the method of performing a random access procedure necessary to implement the present disclosure described above. The transmitter (2620) transmits an R2D message or the like to an Ambient IoT terminal through a predetermined channel. The receiver (2630) receives a D2R message or the like from the Ambient IoT terminal through a predetermined channel.

The controller (2610) may transmit random access type indication information to the Ambient IoT terminal. The controller (2610) may transmit random access type indication information to the Ambient IoT terminal for determining one of CBRA (contention-based random access) and CFRA (contention-free random access) as a random access type. In one example, the random access type indication information may include information indicating one of the contention-based random access (CBRA) and the contention-free random access (CFRA).

In one example, the random access type indication information may be transmitted as included in a paging message. For example, the random access type indication information may be included, in a bit form or a predetermined integer value, in a frame, subframe, slot, or symbol in which a paging message and a paging occasion are included or configured. In another example, the random access type indication information including CFRA or CBRA may be transmitted through a PRDCH, an RCI (R2D Control Information), higher-layer signaling, or a MAC CE. Alternatively, the random access type indication information may be included in a preamble, a midamble, or a postamble of a predetermined R2D message.

In one example, the reader device may include a base station, an intermediate node, or a terminal (UE). In a topology 1, where communication is directly performed between a base station and an Ambient IoT terminal, the reader device may be the base station. In a topology 2, where an intermediate node is present between the base station and the Ambient IoT terminal, the reader device may be the intermediate node.

In one example, when the reader device is an intermediate node, the random access type indication information may be configured based on a paging command received by the reader device from a base station. That is, a paging command including the random access type indication information may be received by the intermediate node from the base station of the network. The intermediate node, acting as the reader, may transmit the random access type indication information to the Ambient IoT terminal based on the random access type indication information in the received paging command.

In this case, the paging command may be transmitted to the intermediate node through any one of a PHY layer message, a MAC layer message, and an RRC layer message. In addition, the random access type indication information may be transmitted to the Ambient IoT terminal as included in a paging message.

In another example, instead of directly indicating a contention-based random access and a contention-free random access, the random access type indication information may include Ambient IoT terminal ID information or Ambient IoT terminal ID type information.

In this case, the Ambient IoT terminal ID information may be one of a single Ambient IoT terminal ID, multiple Ambient IoT terminal IDs, a group ID, or no ID information. Alternatively, Ambient IoT terminal ID type information may be further included together with the Ambient IoT terminal ID information. In one example, the Ambient IoT terminal ID type information may be in a predetermined integer form or a bit form.

The controller (2610) may start a random access procedure according to the random access type determined based on the random access type indication information. According to the random access type indication information received from the reader device, the Ambient IoT terminal may determine one of CFRA and CBRA. That is, in one example, the Ambient IoT terminal may decode a paging message and the random access type indication information and determine, as the random access type, one of CBRA and CFRA that is indicated.

In another example, when a paging message includes Ambient IoT terminal ID information or Ambient IoT terminal ID type information, the Ambient IoT terminal may implicitly determine the random access type based on the Ambient IoT terminal ID information or the Ambient IoT terminal ID type information.

For example, when the Ambient IoT terminal ID information or the Ambient IoT terminal ID type information has ID information that designates each Ambient IoT terminal, such as a single or multiple Ambient IoT device IDs, the Ambient loT terminal may determine the random access type as a CFRA type. Alternatively, when the Ambient IoT terminal ID information or the Ambient IoT terminal ID type information is a group ID or when device ID information does not exist, the Ambient IoT terminal that has received the message may determine the random access type as a CBRA type. Alternatively, the Ambient IoT terminal may determine the random access type based on a predetermined random access type determination mapping table.

After the Ambient IoT terminal determines the random access type, a random access procedure is triggered and the Ambient IoT terminal may transmit a D2R (Msg1) message. The controller (2610) may transmit an R2D (Msg2) message in response to the D2R message received from the Ambient IoT terminal. Thereafter, the controller (2610) may continue to perform a predetermined random access procedure with the Ambient IoT terminal.

According to the embodiments described above, a random access procedure may be performed efficiently in an Ambient IoT environment. Further, wireless random access between A-IoT terminals and a reader may be performed more efficiently in an Ambient IoT environment. Specifically, the A-IoT terminals may efficiently determine, as a wireless access type, one of CBRA (contention-based random access) and CFRA (contention-free random access) based on information in a first R2D message received from the reader.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

## Claims

1. A method for performing a random access procedure by an Ambient Internet of Things (IoT) terminal, the method comprising:
receiving, from a reader device, random access type indication information;
determining a random access type based on the random access type indication information; and
starting the random access procedure according to the random access type.

2. The method of claim 1, wherein the random access type indication information is received as included in a paging message.

3. The method of claim 1, wherein when the reader device is an intermediate node, the random access type indication information is configured based on a paging command received by the reader device from a base station.

4. The method of claim 3, wherein
the paging command is received through one of a physical (PHY) layer message, a medium access control (MAC) layer message, and an radio resource control (RRC) layer message, and
the random access type indication information is received as included in a paging message.

5. The method of claim 1, wherein
the random access type indication information includes information indicating one of a contention-based random access (CBRA) and a contention-free random access (CFRA), or
includes Ambient IoT terminal ID information or Ambient IoT terminal ID type information that is used to determine one of the contention-based random access and the contention-free random access.

6. A method for performing a random access procedure by a reader device, the method comprising:
transmitting random access type indication information to an Ambient Internet of Things (IoT) terminal; and
starting the random access procedure according to a random access type determined based on the random access type indication information.

7. The method of claim 6, wherein the random access type indication information is transmitted as included in a paging message.

8. The method of claim 6, wherein when the reader device is an intermediate node, the random access type indication information is configured based on a paging command received by the reader device from a base station.

9. The method of claim 8, wherein
the paging command is transmitted through any one of a physical (PHY) layer message, a medium access control (MAC) layer message, and an radio resource control (RRC) layer message, and
the random access type indication information is transmitted as included in a paging message.

10. The method of claim 6, wherein
the random access type indication information includes information indicating one of a contention-based random access (CBRA) and a contention-free random access (CFRA), or
includes Ambient IoT terminal ID information or Ambient IoT terminal ID type information that is used to determine one of the contention-based random access and the contention-free random access.

11. An Ambient Internet of Things (IoT) terminal for performing a random access procedure, comprising:
a transmitter;
a receiver; and
a controller configured to control operations of the transmitter and the receiver,
wherein the controller is configured to receive random access type indication information from a reader device, determine a random access type based on the random access type indication information, and start performing the random access procedure according to the random access type.

12. The Ambient IoT terminal of claim 11, wherein the random access type indication information is received as included in a paging message.

13. The Ambient IoT terminal of claim 11, wherein when the reader device is an intermediate node, the random access type indication information is configured based on a paging command received by the reader device from a base station.

14. The Ambient IoT terminal of claim 13, wherein
the paging command is received through any one of a physical (PHY) layer message, a medium access control (MAC) layer message, and an radio resource control (RRC) layer message, and
the random access type indication information is received as included in a paging message.

15. The Ambient IoT terminal of claim 11, wherein
the random access type indication information includes information indicating one of a contention-based random access (CBRA) and a contention-free random access (CFRA), or
includes Ambient IoT terminal ID information or Ambient IoT terminal ID type information that is used to determine one of the contention-based random access and the contention-free random access.
